# FASCICULE DE BREVET EUROPEEN

(11) **EP 2 509 768 B1**
(45) Date de publication et mention de la délivrance du brevet: **16.08.2017**
(21) Numéro de dépôt: 10787406.7
(22) Date de dépôt: 02.12.2010
(51) Int. Cl.: B29C 49/42, B65G 17/40, B65G 17/38, B29C 49/68

(54) **CHAÎNE POUR LE TRANSPORT DE PRÉFORMES COMPORTANT DES ARTICULATIONS ÉQUIPÉES DE PALIERS DÉCALÉS**
KETTE FÜR DEN TRANSPORT VON VORFORMEN MIT GELENKEN MIT OFFSET-LAGERN
CHAIN FOR TRANSPORTING PREFORMS, COMPRISING ARTICULATIONS EQUIPPED WITH OFFSET BEARINGS

(30) Priorité: 07.12.2009 FR 0958691
(43) Date de publication de la demande: 17.10.2012
(73) Titulaire: Sidel Participations, 76930 Octeville-sur-Mer (FR)
(72) Inventeur: CIRETTE, Damien, F-76930 Octeville Sur Mer (FR)
(74) Mandataire: Grassin d'Alphonse, Emmanuel Jean Marie
(86) Numéro de dépôt international: PCT/EP2010/068689
(87) Numéro de publication internationale: WO 2011/069877

(56) Documents cités:
- EP-A2- 0 248 376
- CN-Y- 201 244 899
- DE-A1-102004 034 286

## Description

L'invention se rapporte à une chaîne sans fin pour le transport de préformes.

L'invention se rapporte plus particulièrement à une chaîne sans fin pour le transport de préformes, notamment pour le transport de préformes à travers un four de conditionnement thermique des préformes, la chaîne comportant une succession de maillons longitudinaux dont chacun est attaché de manière pivotante au suivant par une articulation, chaîne dans laquelle :
- chaque articulation comporte au moins un palier pour le montage pivotant de deux maillons successifs autour d'un axe vertical d'articulation ;
- deux axes d'articulation successifs sont espacés d'un pas déterminé ;
- chaque maillon est apte à porter des moyens de support pour au moins une préforme.

La fabrication de récipients en matière thermoplastique, tels que des bouteilles, flacons, etc. est généralement effectuée à partir de préformes, parfois appelées ébauches, qui sont introduites dans un dispositif de moulage auquel sont associés des moyens de soufflage ou d'étirage-soufflage. Préalablement à leur moulage par soufflage ou étirage-soufflage, les préformes sont chauffées dans un four de conditionnement thermique de manière à leur conférer une structure suffisamment malléable pour l'opération de soufflage.

Les dispositifs de fabrication en grande série de tels récipients sont équipés de fours de conditionnement comportant un tunnel de chauffage muni des moyens de chauffage des préformes. Les préformes sont généralement transportées à travers le tunnel de chauffage à grande vitesse sans marquer d'arrêt. Le tunnel présente une longueur suffisante pour permettre le chauffage des préforme durant leur traversée.

Il est connu d'utiliser une chaîne sans fin pour réaliser le transport des préformes à travers le tunnel. La chaîne comporte une pluralité de maillons dont au moins certains portent des moyens de support des préformes. Les moyens de support sont selon les cas des tournettes ou des mandrins.

La chaîne est tendue autour de roues dentées permettant l'entraînement et/ou le guidage de la chaîne.

Chaque maillon de la chaîne est monté pivotant autour d'un axe vertical d'articulation avec le maillon suivant par l'intermédiaire d'un palier à roulement ou d'un palier lisse. Les maillons de la chaîne réalisée selon l'état de la technique sont identiques entre eux, et les paliers, lisses ou à roulement, de deux maillons successifs sont agencés dans un même plan horizontal.

Les documents CN-Y-201.244.899 et DE-A1-10.2004.034286 divulguent des exemples de réalisations de ce type de chaîne utilisant des paliers lisses.

Dans une telle chaîne, pour des raisons d'encombrement, chaque palier présente nécessairement un diamètre extérieur qui est inférieur au pas séparant deux axes successifs. Les paliers adaptés à une telle dimension sont souvent des roulements à aiguilles.

On a constaté que de tels paliers à roulement s'usaient rapidement par rapport à d'autres éléments de la chaîne.

En outre, de tels paliers à roulement présentent une limite de résistance à l'effort assez faible par rapport à d'autres types de paliers à roulement. Or, les chaînes de transport de préformes sont soumises à des efforts pouvant s'approcher voire dépasser cette limite, notamment du fait d'accélération ou freinage violents que la chaîne est susceptible de subir.

Par ailleurs, les paliers à roulement actuellement employés ne sont pas étanches. De tels paliers à roulement doivent être entretenus fréquemment pour éviter qu'ils ne soient endommagés prématurément.

De plus, il peut arriver que le lubrifiant utilisé pour entretenir ces paliers à roulement soit projeté dans le four de conditionnement voire même sur les préformes. Or, les récipient réalisés à partir des préformes sont très fréquemment destinés à contenir des produits alimentaires. Les normes très strictes en matière d'hygiène imposent donc l'emploie de lubrifiants non toxiques et non polluants. Ce type de lubrifiant est très onéreux et parfois moins efficace qu'un lubrifiant traditionnel.

La présente invention concerne une chaîne de transport du type décrit précédemment, caractérisée en ce que chaque palier d'une articulation est décalé verticalement par rapport à chaque palier de l'articulation suivante.

Selon d'autres caractéristiques de l'invention :
- le diamètre externe de chaque palier est supérieur ou égal au pas déterminé ;
- chaque articulation comporte deux paliers coaxiaux ;
- la chaîne comporte un nombre pair de maillons, et la chaîne comporte plus particulièrement des maillons impairs identiques entre eux et des maillons pairs identiques entre eux, chaque maillon impair étant montés en alternance avec un maillon pair le long de la chaîne ;
- la chaîne présente un plan de symétrie longitudinal orthogonal aux axes verticaux d'articulation ;
- chaque maillon pair comporte deux plaques longitudinales qui sont agencées verticalement de part et d'autre de chaque maillon impair suivant et précédent ;
- les deux plaques d'un maillon pair sont liées rigidement entre elles ;
- chaque maillon pair est réalisé venu de matière en un seul bloc ;
- chaque articulation comporte au moins un galet qui est destiné à être engrené sur une roue dentée, chaque galet étant interposé entre une plaque du maillon pair et le maillon impair ;
- chaque maillon impair est réalisé venu de matière en un seul bloc ;
- chaque maillon impair est formé par un empilement vertical d'une plaque supérieure et d'une plaque inférieure dont chacune est respectivement identique à la plaque supérieure et à la plaque inférieure de chaque maillon pair ;
- les paliers sont formés par des roulements à billes étanches autolubrifiants.

D'autres caractéristiques et avantages apparaîtront à la lecture de la description détaillée qui va suivre pour la compréhension de laquelle on se reportera aux dessins annexés parmi lesquels :
- la figure 1 est une vue de dessus qui représente schématiquement une installation de fabrication de récipients équipée d'un dispositif de transport de préformes comportant une chaîne sans fin réalisée selon les enseignements de l'invention ;
- la figure 2 est une vue en perspective qui représente une portion de chaîne réalisée selon les enseignements de l'invention qui est engrenée sur une double roue dentée ;
- la figure 3 est une vue en perspective qui représente un maillon impair de la chaîne de la figure 2 ;
- la figure 4 est une vue en perspective qui représente un maillon pair de la chaîne de la figure 2 ;
- la figure 5 est une vue en section longitudinale verticale passant par les axes d'articulation qui représente une articulation impaire pour le montage pivotant d'un maillon pair avec le maillon impair suivant de la chaîne de la figure 2 ;
- la figure 6 est une vue similaire à celle de la figure 5 qui représente une articulation paire pour le montage pivotant d'un maillon impair avec le maillon pair suivant de la chaîne de la figure 2 ;
- la figure 7 est une vue en perspective qui représente une portion de la chaîne de la figure 2 comportant quatre maillons successifs articulés entre eux ;
- la figure 8 est une vue en section selon le plan de coupe 8-8 de la figure 7.

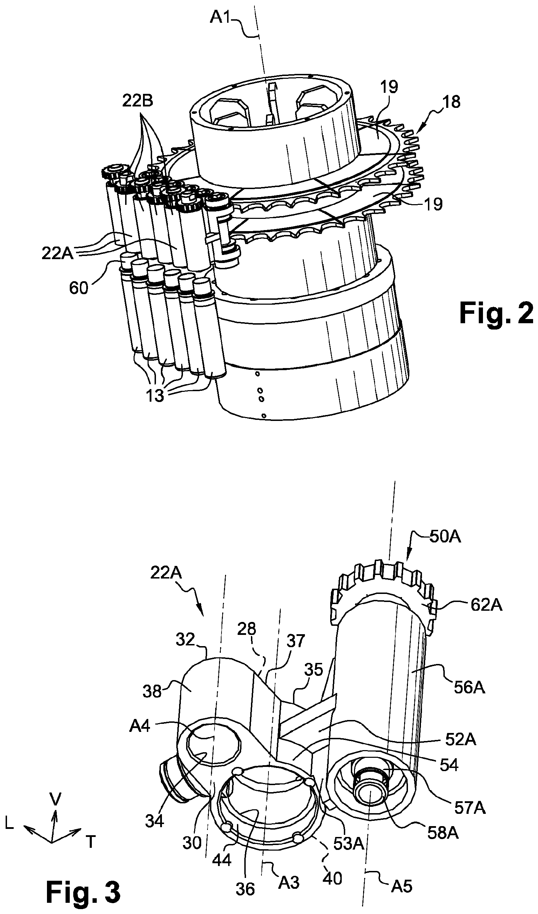

Dans la suite de la description et dans les revendications, on adoptera à titre non limitatif pour chaque maillon une orientation longitudinale, une orientation verticale et une orientation transversale indiquées par le trièdre "L, V, T" des figures 3 à 8. On définit aussi un plan horizontal qui est orthogonal à la direction verticale.

La direction longitudinale est orientée de l'arrière vers l'avant. La direction verticale est orientée depuis le bas vers le haut. La direction transversale "T" est orientée depuis l'intérieure de la boucle fermée formée par la chaîne 20 sans fin vers l'extérieur de ladite boucle.

On comprendra que la direction verticale est utilisée par commodité pour faciliter la compréhension de la description et des revendications. Sauf indication contraire dans la description, cette direction verticale n'est pas nécessairement la direction de la gravité terrestre. Suivant cette logique, on définit aussi des directions horizontales qui sont orthogonales à la direction verticale.

Dans la suite de la description, des éléments présentant des fonctions identiques, similaires ou analogues seront désignés par un même numéro de référence.

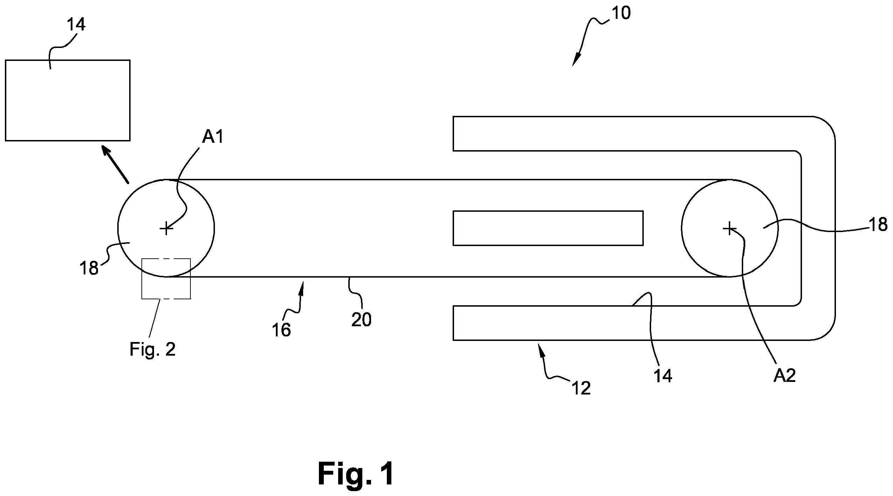

On a représenté à la figure 1 une installation 10 de fabrication de récipients en matériau thermoplastique qui comporte principalement un four 12 de conditionnement thermique de préformes 13 et une station 14 de moulage par soufflage des préformes 13 ainsi conditionnées, c'est-à-dire chauffées, pour former les récipients en matériau thermoplastique.

De manière connue, le four 12 de conditionnement thermique se présente sous la forme d'un tunnel 14 qui est traversé par les préformes 13. Les préformes 13 sont chauffées lors de leur traversée.

L'installation 10 comporte un dispositif 16 de transport de préformes 13 à travers le four 12 de conditionnement thermique. Le dispositif 16 de transport comporte au moins deux roues 18 dentées horizontalement distantes l'une de l'autre dont chacune est montée tournantes autour d'un axe "A1, A2" vertical. Au moins l'une des deux roues 18 dentées est entraînée en rotation par des moyens de motorisation (non représentés).

Comme représenté plus en détail à la figure 2, chaque roue 18 dentée comporte deux plateaux 19 dentés identiques superposés verticalement.

Comme illustré schématiquement à la figure 1, une chaîne 20 sans fin est engrenée autour de ces deux roues 18. La chaîne 20 forme une boucle fermée curvilinéaire qui s'étend dans un plan horizontal.

Des moyens tendeurs (non représentés) permettent de maintenir tendu un brin mené de la chaîne 20.

La chaîne 20 sans fin est destinée à transporter des préformes 13, notamment à travers le four 12 de conditionnement thermique des préformes 13.

On décrit à présent en détail la chaîne 20 sans fin réalisée selon un mode de réalisation de l'invention en référence aux figures 2 à 8.

On a représenté à la figure 2 une portion de la chaîne 20, cette portion comportant une succession de six maillons 22A, 22B. On comprendra que les maillons 22A, 22B d'extrémité de cette portion sont chacun articulé avec d'autres maillons 22A, 22B pour former la chaîne 20 sans fin.

La chaîne 20 sans fin pour le transport des préformes 13 comporte une succession de maillons 22A, 22B longitudinaux dont chacun est attaché de manière pivotante au maillon 22B, 22A suivant par une articulation 24, 26. Les articulations 24, 26 seront décrites plus en détails par la suite.

Pour simplifier la description, on définit les termes "suivant" et " précédent" utilisés pour qualifier un maillon 22A, 22B ou une articulation 24, 26 de la manière suivante. Chaque maillon 22A, 22B est articulé vers l'arrière avec un maillon 22A, 22B précédent par l'intermédiaire d'une articulation 24, 26 arrière et vers l'avant avec un maillon 22B, 22A suivant par l'intermédiaire d'une articulation 24, 26 avant. Chaque articulation 24, 26 permet ainsi le pivotement des deux maillons 22A, 22B successifs autour d'un axe "A3, A4" vertical d'articulation.

De même, chaque articulation 24, 26 est directement suivie vers l'avant par une articulation 24, 26 suivante et elle est directement précédée vers l'arrière par une articulation 24, 26 précédente.

Chaque articulation 24, 26 entre deux maillons 22A, 22B successifs est destinée à réaliser deux fonctions :
- une fonction d'attache des deux maillons 22A, 22B successifs longitudinalement ensemble ;
- et une fonction de pivotement des deux maillons 22A, 22B successifs l'un par rapport à l'autre autour d'un axe "A3, A4" vertical d'articulation.

Dans le mode de réalisation représenté aux figures 2 à 8, la chaîne 20 comporte un nombre pair de maillons 22A, 22B. La chaîne 20 comporte des maillons 22A impairs et des maillons 22B pairs. Chaque maillon impair 22A est agencé en alternance avec un maillon pair 22B tout le long de la chaîne 20. Les maillons 22A impairs sont identiques entre eux et les maillons 22B pairs sont identiques entre eux. Pour cette raison, on décrit par la suite un seul maillon 22A impair et un seul maillon 22B pair, ces descriptions étant respectivement applicables aux autres maillons 22A impairs et aux autres maillons 22B pairs.

En outre, les numéros de référence se rapportant aux parties d'un maillon 22A impair seront suivis de la lettre "A", tandis que les numéros de référence se rapportant aux parties d'un maillon 22B pair seront suivis de la lettre "B".

Un tel mode de réalisation permet avantageusement de diminuer les coûts de fabrication de la chaîne 20 en fabricant uniquement deux types de maillons 22A, 22B différents, c'est-à-dire les maillons 22A impairs et les maillons 22B pairs.

On a représenté à la figure 3 un maillon 22A impair. Le maillon 22A impair se présente sous la forme d'un bloc limité verticalement par une face 28 supérieure horizontale et par une face 30 inférieure horizontale.

Le maillon 22A impair comporte un tronçon 32 d'extrémité avant de forme annulaire qui est traversé par un orifice 34 avant d'axe "A4" vertical, et il comporte un tronçon 35 d'extrémité arrière de forme annulaire qui est traversé par un orifice 36 arrière d'axe "A3" vertical. Le tronçon 32 d'extrémité avant est lié rigidement au tronçon 35 d'extrémité arrière par un tronçon 37 intermédiaire.

L'orifice 34 avant et l'orifice 36 arrière sont débouchant dans les deux sens. Chaque orifice 34, 36 présente une paroi interne cylindrique de révolution.

Les axes "A3, A4" verticaux des orifices 34, 36 avant et arrière sont agencés dans un même plan longitudinal qui est ici un plan médian du maillon 22A impair. L'axe vertical de l'orifice 34 avant est coaxial à l'axe "A4" d'articulation avec le maillon 22B pair suivant, tandis que l'axe vertical de l'orifice 36 arrière est coaxial à l'axe "A3" d'articulation avec le maillon 22B pair précédent.

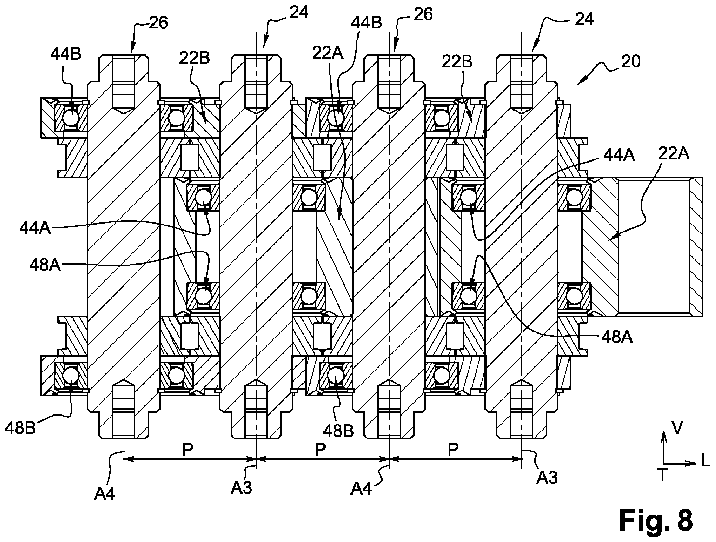

L'axe "A4" d'articulation avant et l'axe "A3" d'articulation arrière sont espacés longitudinalement d'un pas "P" déterminé, comme cela est illustré à la figure 8.

Le maillon 22A impair présente en outre une face 38 verticale d'extrémité longitudinale avant arrondie et il présente une face 40 verticale d'extrémité longitudinale arrière arrondie.

L'orifice 36 arrière présente un diamètre interne supérieur à celui de l'orifice 34 avant. De ce fait, le tronçon 35 d'extrémité arrière présente des dimensions horizontales supérieures à celles du tronçon 32 d'extrémité avant.

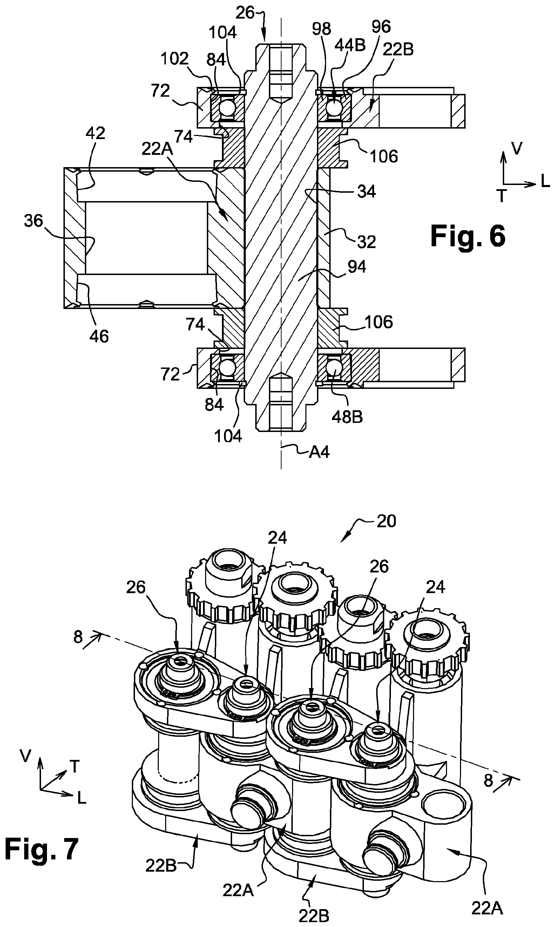

La face supérieure 28 du tronçon 35 d'extrémité arrière du maillon 22A impair comporte en outre un lamage 42 autour de l'orifice 36 arrière, comme cela est particulièrement visible à la figure 6. Le lamage 42 forme un logement qui est destiné à recevoir un premier palier 44A à roulement impair, comme cela sera expliqué par la suite.

De même la face 30 inférieure du tronçon 35 d'extrémité arrière du maillon 22A impair comporte un lamage 46 autour de l'orifice 36 arrière, comme cela est particulièrement visible à la figure 6. Le lamage 46 forme un logement qui est destiné à recevoir un deuxième palier 48A à roulement impair, comme cela sera expliqué par la suite.

Ainsi, le maillon 22A impair est destiné à porter deux paliers 44A, 48A à roulement impairs coaxiaux.

Selon une variante non représentée de l'invention, le maillon impair est destiné à porter plus de deux paliers à roulement impairs coaxiaux.

Le maillon 22A impair est ici réalisé venu de matière en un seul bloc. Le maillon 22A impair est par exemple réalisé en un matériau métallique.

Le maillon 22A impair porte en outre des moyens 50A de support pour une préforme 13. Les moyens 50A de support comportent une potence 52A qui s'étend transversalement en saillie vers l'extérieur depuis une face 54 latérale extérieure du maillon 22A impair. Une extrémité extérieure libre de la potence 52A forme un tube 56A cylindrique d'axe "A2" vertical. La potence 52A est ici réalisée venue de matière avec le maillon 22A impair.

Cette potence 52A comporte des nervures 53A verticales qui s'étendent entre la face 54 latérale extérieure du maillon 22A pair et la paroi externe du tube 56B

Une tige 57A verticale est agencée de manière tournante dans le tube 56A autour de l'axe "A2" vertical. L'extrémité inférieure de la tige 57A comporte un moyen 58A de préhension d'un col 60 de préforme 13 de manière que l'axe principale de la préforme 13 soit coaxial à l'axe "A2" de la tige verticale 57A.

L'extrémité supérieure de la tige 57A est équipée d'un pignon 62A qui est destiné à être engrené avec une crémaillère (non représentée) pour provoquer la rotation de la préforme 13 autour de l'axe "A2" lors de l'entraînement de la chaîne 20 par les roues 18 dentées.

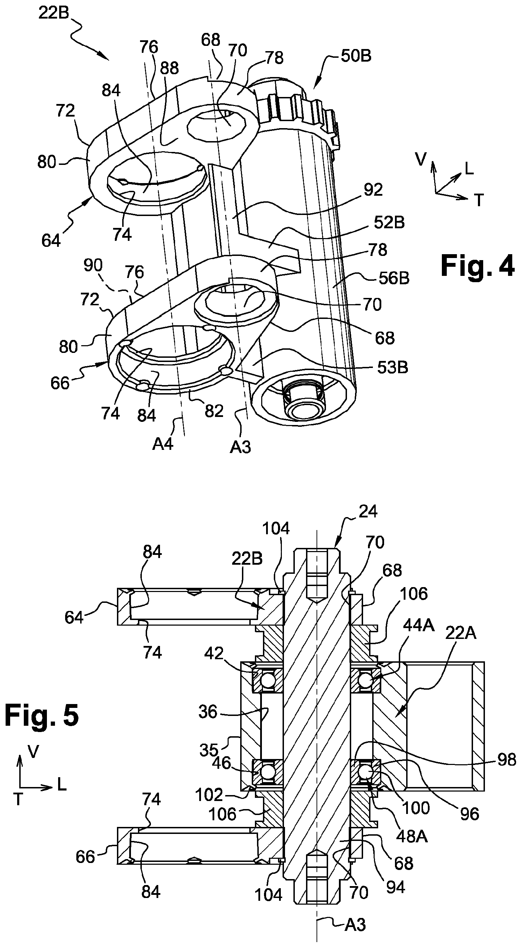

On décrit à présent un maillon 22B pair de la chaîne 20 de transport en référence à la figure 4. Ce maillon 22B pair comporte principalement une plaque 64 supérieure et une plaque 66 inférieure. Les deux plaques 64, 66 sont horizontales et elles sont parallèles entre elles.

Les deux plaques 64, 66 présentent une même structure par symétrie par rapport à un plan horizontal médian du maillon 22B pair. Seule la plaque 66 inférieure sera décrite par la suite, cette description étant applicable, par symétrie, à la plaque 64 supérieure. Les différentes parties de la plaque 64 supérieure seront de ce fait désignées par des mêmes numéros de référence que les parties correspondantes de la plaque 66 inférieure.

La plaque 66 inférieure comporte un tronçon 68 d'extrémité avant de forme annulaire qui est traversé par un orifice 70 avant d'axe "A3" vertical. La plaque 66 inférieure comporte aussi un tronçon 72 d'extrémité arrière de forme annulaire qui est traversé par un orifice 74 arrière d'axe "A4" vertical. Le tronçon 68 d'extrémité avant est lié rigidement au tronçon 72 d'extrémité arrière par un tronçon 76 intermédiaire.

L'orifice 70 avant et l'orifice 74 arrière sont débouchant verticalement dans les deux sens. Chaque orifice 70, 74 présente une paroi interne cylindrique de révolution.

Les axes "A3, A4" verticaux des orifices 70, 74 avant et arrière sont agencés dans un même plan longitudinal qui est ici un plan médian du maillon 22B pair. L'axe "A3" vertical de l'orifice 70 avant est coaxial à l'axe "A3" d'articulation avec le maillon 22A impair suivant, tandis que l'axe "A4" vertical de l'orifice 74 arrière est coaxial à l'axe "A4" d'articulation avec le maillon 22A impair précédent.

Le pas "P" longitudinal entre l'axe "A3" de l'orifice avant et l'axe "A4" d'orifice arrière du maillon 22B pair est égal au pas "P" longitudinal entre l'axe "A4" d'orifice 34 avant et l'axe "A3" d'orifice 36 arrière du maillon 22A impair. Le pas "P" entre deux axes "A3, A4" d'articulation successifs est ainsi le même tout le long de la chaîne 20.

La plaque 66 inférieure du maillon 22B pair présente en outre une face 78 verticale d'extrémité longitudinale avant arrondie, et elle présente une face 80 verticale d'extrémité longitudinale arrière arrondie.

L'orifice 74 arrière présente un diamètre interne supérieur à celui de l'orifice 70 avant. De ce fait, le tronçon 72 d'extrémité arrière présente des dimensions horizontales supérieures à celles du tronçon 68 d'extrémité avant.

La face inférieure 82 du tronçon 72 d'extrémité arrière de la plaque 66 inférieure comporte en outre un lamage 84 autour de l'orifice 74 arrière.

Du fait de la symétrie entre les deux plaques 64, 66, le lamage 84 de la plaque 64 supérieure forme un logement qui est destiné à recevoir un premier palier 44B à roulement pair, tandis que le lamage 84 de la plaque 66 inférieure forme un logement qui est destiné à recevoir un deuxième palier 48B à roulement pair.

Le maillon 22B pair est ainsi destiné à recevoir deux paliers 44B, 48B à roulement pairs coaxiaux.

Comme représenté à la figure 4, la plaque 64 supérieure du maillon 22B pair est agencée verticalement à distance au-dessus de la plaque 66 inférieure dudit maillon 22B pair. L'orifice 70 avant, respectivement l'orifice 74 arrière, de la plaque 64 supérieure du maillon 22B pair est agencé verticalement en coïncidence avec l'orifice 70 avant, respectivement l'orifice 74 arrière, de la plaque 66 inférieure dudit maillon 22B pair.

La face inférieure 88 de la plaque 64 supérieure est écartée verticalement de la face supérieure 90 de la plaque 66 inférieure d'une distance qui est supérieure à l'épaisseur verticale du maillon 22A impair.

Le maillon 22B pair est ici réalisé venu de matière en un seul bloc. A cet effet, la plaque 64 supérieure est reliée à la plaque 66 inférieure par un montant 92 latéral extérieur qui s'étend depuis un bord de l'orifice 74 arrière de la plaque 64 supérieure jusqu'à un bord de l'orifice 74 arrière de la plaque 66 inférieure. Le montant 92 permet de lier rigidement les deux plaques 64, 66 du maillon 22B pair entre elles.

Le maillon 22B pair est par exemple réalisé en un matériau métallique.

Le maillon 22B pair porte en outre des moyens 50B de support pour une préforme 13. Ces moyens 50B de support sont avantageusement identiques à ceux portés par les maillons 22A impairs. On se reportera donc à la description précédemment effectuée pour le maillon 22A impair pour un exemple d'un tel moyen 50B de support.

Dans l'exemple représenté, la potence 52B s'étend transversalement vers l'extérieur depuis une face latérale extérieure du montant 92 du maillon 22B pair. La potence 52B est réalisée venue de matière avec le maillon 22B pair. Cette potence 52B comporte des nervures 53B verticales qui s'étendent entre la face latérale extérieure du montant 92 et la paroi externe du tube 56B de manière à renforcer encore la rigidité de la liaison entre la plaque 64 supérieure et la plaque 66 inférieure.

Les articulations 24, 26 des maillons 22A, 22B entre eux vont à présent être décrites en référence aux figures 4 à 8.

Deux axes "A3, A4" d'articulation successifs sont espacés du pas "P" déterminé. Comme représenté à la figure 8, le pas "P" déterminé est le même pour chaque paire d'axe "A3, A4" d'articulation successifs de la chaîne 20.

Chaque articulation 24, 26 comporte ici un goujon 94 d'axe vertical pour attacher longitudinalement deux maillons 22A, 22B successifs ensemble, et au moins un palier 44A, 44B à roulement, 48A, 48B pour le montage pivotant des deux maillons 22A, 22B successifs autour de leur axe "A3, A4" vertical d'articulation.

Comme cela sera expliqué par la suite l'agencement des paliers 44A, 44B, 48A, 48B à roulement diffère entre deux articulations 24, 26 successives. Ainsi, chaque palier 44A, 44B, 48A, 48B à roulement d'une articulation 24, 26 est décalé verticalement par rapport à chaque palier 44A, 44B, 48A, 48B à roulement de l'articulation 24, 26 suivante. Cela permet avantageusement d'utiliser des paliers 44A, 44B, 48A, 48B à roulement présentant un diamètre externe qui est supérieur au pas "P" longitudinal séparant deux axes "A3, A4" d'articulation successifs.

Dans l'exemple représenté aux figures, la chaîne 20 comporte :
- des articulations 24 impaires pour articuler un maillon 22B pair avec le maillon 22A impair suivant, comme représenté à la figure 5 ;
- des articulations 26 paires d'un maillon 22A impair avec le maillon 22B pair suivant, comme représenté à la figure 6.

Le fait de n'avoir que deux types d'articulation 24, 26 impaire et paire permet de diminuer les coûts de fabrication de la chaîne 20.

En outre, dans le mode de réalisation représenté aux figures, les articulations 24 impaires comportent des éléments identiques à ceux des articulations 26 paires. Ainsi l'articulation 26 paire diffère de l'articulation 24 impaire uniquement dans l'agencement desdits éléments, notamment dans l'agencement des paliers 44A, 44B, 48A, 48B à roulement.

Chaque articulation 24 impaire est agencée en alternance avec une articulation 26 paire tout au long de la chaîne 20.

Dans le mode de réalisation représenté aux figures 5, 6 et 8, chaque articulation 24, 26 paire ou impaire comporte deux paliers 44A, 44B, 48A, 48B à roulement coaxiaux afin d'équilibrer les efforts longitudinaux exercés par les maillons 22A, 22B sur le goujon 94. Ces efforts sont notamment dus aux variations de vitesse brutales que la chaîne 20 est susceptible de subir.

On décrit en référence à la figure 5 l'articulation 24 impaire pour articuler un maillon 22B pair avec un maillon 22A impair suivant.

Dans ce premier agencement, les tronçons 68 d'extrémité avant des plaques 64, 66 du maillon 22B pair sont agencés verticalement de part et d'autre du tronçon 35 d'extrémité arrière du maillon 22A impair suivant de manière que l'axe "A3" des orifices 70 avant du maillon 22A impair soient coaxiaux avec l'axe "A3" de l'orifice 36 arrière du maillon 22A impair suivant.

Un premier palier 44A à roulement impair est agencé dans le lamage 42 supérieur du maillon 22A impair et un deuxième palier 48A à roulement impair est agencé dans le lamage 46 inférieur du maillon 22A impair.

Chaque palier 44A, 48A à roulement impair est ici formé par un roulement à billes étanche dit "autolubrifiant".

Les deux paliers 44A, 48A à roulement impairs sont identiques. De manière connue, chaque palier 44A, 48A à roulement impair comporte ainsi une bague 96 externe et une bague 98 interne qui est montée tournante dans la bague 96 externe autour d'un axe vertical de rotation par l'intermédiaire d'éléments de roulement tels que des billes 100.

Le diamètre externe de la bague 96 externe sera appelé diamètre externe du palier 44A, 48A à roulement impair, tandis que le diamètre interne de la bague 98 interne sera appelé diamètre interne du palier 44A, 48A à roulement impair.

Le diamètre externe de chaque palier 44A, 48A à roulement impair est ici adapté pour être reçu dans le lamage 42, 46 associé soit serré, soit avec un léger jeu pour en faciliter l'insertion. Le diamètre interne de chaque palier 44A, 48A à roulement impair est égal au diamètre interne des orifices 70 avant du maillon 22B pair.

Le diamètre interne de la bague 96 externe de chaque palier 44A, 48A à roulement impair est sensiblement égal au diamètre de l'orifice 36 arrière du maillon 22A impair. Ainsi, chaque bague 96 externe est en appui contre le fond du lamage 42, 46 associé, la bague 98 interne du palier 44A, 48A à roulement impair étant ainsi libre de tourner sans frotter contre le maillon 22B pair.

En outre, chaque palier 44A, 48A à roulement impair est retenu verticalement dans son lamage 42, 46 par des ergots 102 transversal. Chaque ergot 102 est par exemple obtenu par déformation ponctuelle du bord du lamage 42, 46 après que le palier 44A, 48A à roulement ait été agencé dans ledit lamage 42, 46.

En variante, les paliers à roulement peuvent bien entendu être bloqués axialement par tout autre moyen de blocage axial connu, par exemple par des écrous, par des anneaux élastiques, par serrage dans le logement...

L'axe vertical de rotation de chaque palier 44A, 48A à roulement impair agencé dans son lamage 42, 46 est ainsi coaxial à l'axe "A3" d'articulation.

Le goujon 94 est inséré dans les orifices 36, 70 en coïncidence du maillon 22A impair et du maillon 22B pair suivant de manière à attacher longitudinalement lesdits maillons 22A, 22B ensemble.

Le diamètre externe du fût du goujon 94 est adapté pour être reçu serré, ou avec un léger jeu d'insertion, dans les orifices 70 avant du maillon 22B pair et dans la bague interne de chaque palier 44A, 48A à roulement impair.

Dans un tel montage le goujon 94 est de préférence monté serré afin d'être solidaire en rotation du maillon 22B pair pour éviter l'usure à l'interface entre ces deux pièces.

Chaque palier 44A, 48A à roulement impair est ainsi interposé entre le maillon 22B pair et le fût du goujon 94 d'attache. La bague 98 interne de chaque 44A, 48A palier à roulement impair est ainsi solidaire en rotation du maillon 22B pair par l'intermédiaire du goujon 94, tandis que la bague 96 externe du palier 44A, 48A à roulement impair est solidaire en rotation du maillon 22A impair.

Le goujon 94 est immobilisé verticalement par rapport au maillon 22A impair au moyen d'anneaux 104 élastiques du type "circlips". A cet effet, le goujon 94 comporte :
- une gorge annulaire supérieure qui est agencée de manière affleurante à la face supérieure du tronçon 68 d'extrémité avant de la plaque supérieure 64 du maillon 22B pair lorsque le goujon 94 est monté ;
- et une gorge annulaire inférieure qui est agencée de manière affleurante à la face inférieure du tronçon 68 d'extrémité avant de la plaque inférieure 66 du maillon 22B pair lorsque le goujon 94 est monté.

Chaque anneau 104 élastique est ainsi engagé dans la gorge annulaire correspondante du goujon 94 en prenant appui verticalement sur la face affleurante correspondante du maillon 22B pair pour l'immobilisation verticale du goujon 94.

Le maillon 22B pair est ainsi monté pivotant sur le maillon 22A impair suivant autour de l'axe "A3" d'articulation par l'intermédiaire des deux paliers 44A, 48A à roulement impairs coaxiaux.

L'articulation 24 impaire est aussi équipée de deux galets 106 d'engrènement avec les roues 18 dentées. Un galet 106 supérieur est interposé verticalement entre la plaque 64 supérieure du maillon 22A impair et le maillon 22B pair, et un galet 106 inférieur est interposé axialement entre la plaque 66 inférieure du maillon 22A impair et le maillon 22B pair. Chaque galet 106 est ainsi susceptible d'être reçu entre deux dents d'un plateau 19 de chaque roue 18 dentée pour l'entraînement de la chaîne 20, comme représenté à la figure 1.

On décrit en référence à la figure 6 une articulation 26 paire pour l'articulation d'un maillon 22A impair sur un maillon 22B pair suivant.

Dans cette articulation 26 paire, le tronçon 32 d'extrémité avant du maillon 22A impair est agencé verticalement entre les tronçons 72 d'extrémités arrière des plaques 64, 66 du maillon 22B pair suivant de manière que l'axe "A4" de l'orifice 34 avant du maillon 22B pair soit coaxial avec l'axe "A4" des orifices 74 arrière du maillon 22B pair suivant.

Le premier palier 44B à roulement pair est agencé dans le lamage 84 de la plaque 64 supérieure du maillon 22B pair et le deuxième palier 48B à roulement pair est agencé dans le lamage 84 de la plaque 66 inférieure du maillon 22B pair.

Les paliers 44B, 48B à roulement pairs sont structurellement identiques aux paliers 44A, 48A à roulement impairs. La description effectuée précédemment pour les paliers 44A, 48A à roulement impairs s'applique donc aux paliers 44B, 48B à roulement pairs.

Notamment, le diamètre externe de chaque palier 44B, 48B à roulement pair est aussi adapté pour être reçu dans son lamage 84 soit serré, soit avec un léger jeu pour en faciliter l'insertion. Le diamètre interne de chaque palier 44B, 48B à roulement pair est égal au diamètre interne de l'orifice 34 avant du maillon 22A impair.

L'axe vertical de chaque palier 44B, 48B à roulement pair agencé dans son lamage 84 est ainsi coaxial à l'axe "A4" d'articulation du deuxième agencement.

Les paliers 44B, 48B à roulement pairs sont agencés et fixés de la même manière que les paliers 44A, 48A à roulement impairs dans leurs lamages 42, 46 respectifs.

Le goujon 94 de l'articulation 26 paire est ensuite inséré dans les orifices 34, 74 en coïncidence de manière à attacher longitudinalement le maillon 22A impair avec le maillon 22B pair suivant.

Le goujon 94 de cette articulation 26 paire est structurellement identique au goujon 94 de l'articulation 24 impaire décrite précédemment. Le fût du goujon 94 présente ainsi une paroi externe cylindrique de révolution autour de l'axe "A4" d'articulation. Le diamètre externe du fût du goujon 94 est adapté pour être reçu serré, ou avec un léger jeu d'insertion, dans l'orifice 34 avant du maillon 22A impair et dans la bague 98 interne de chaque palier 44B, 48B à roulement pair.

Dans un tel montage le goujon 94 est de préférence solidaire en rotation du maillon 22A impair afin d'éviter l'usure à l'interface entre ces deux pièces.

Chaque palier 44B, 48B à roulement pair est ainsi interposé entre le maillon 22A impair et le fût du goujon 94. La bague 98 interne de chaque palier 44B, 48B à roulement pair est ainsi solidaire en rotation du maillon 22A impair, tandis que la bague 96 externe du palier 44B, 48B à roulement pair est solidaire en rotation du maillon 22B pair.

Le goujon 94 est immobilisé verticalement par rapport au maillon 22A impair au moyen d'anneaux 104 élastiques du type "circlips". A cet effet, le goujon 94 comporte :
- une gorge annulaire supérieure qui est agencée de manière affleurante à la face supérieure de la bague interne 98 du premier palier 44B à roulement pair lorsque le goujon 94 est monté ;
- et une gorge annulaire inférieure qui est agencée de manière affleurante à la face supérieure de la bague interne 98 du deuxième palier 48B à roulement pair lorsque le goujon 94 est monté.

Chaque anneau 104 élastique est ainsi engagé dans la gorge annulaire correspondante du goujon 94 en prenant appui verticalement sur la face affleurante correspondante du maillon 22B pair pour l'immobilisation verticale du goujon 94.

Le maillon 22A impair est ainsi monté pivotante sur le maillon 22B pair suivant autour de l'axe "A4" d'articulation par l'intermédiaire des deux paliers 44B, 48B à roulement pairs coaxiaux.

L'articulation 26 paire est aussi équipée de deux galets 106 d'engrènement avec les roues 18 dentées. Ces galets 106 sont identiques dans leur structure et dans leur agencement par rapport à ceux de l'articulation 24 impaire.

La chaîne 20 ainsi obtenue présente avantageusement un plan de symétrie médian horizontal. Ceci permet d'équilibrer les efforts reçus par les goujons 94, comme expliqué précédemment.

Comme représenté aux figures 7 et 8, grâce aux décalages verticaux des paliers 44A, 48A à roulement impairs de chaque articulation 24 impaire par rapport aux paliers 44B, 48B à roulement pairs de chaque articulation 26 paire, il est possible d'agencer des paliers 44A, 44B, 48A, 48B à roulement pairs et impairs présentant un diamètre externe supérieur au pas "P" entre les deux axes "A3, A4" d'articulation successifs.

Ainsi, comme représenté à la figure 8, on constate que les paliers à roulement pairs et impairs de deux articulations 24, 26 successives se chevauchent longitudinalement sans pour autant interférer entre eux.

Dans ce mode de réalisation, les paliers 44A, 48A, 44B, 48B à roulement sont plus particulièrement agencés en quinconce, comme cela est visible à la figure 8.

Selon une variante non représentée de l'invention, les deux paliers à roulement impairs sont remplacés par un unique palier à roulement qui est agencé en position centrale dans le motif en quinconce évoqué au paragraphe précédent.

Les paliers 44A, 44B, 48A, 48B à roulement de diamètre externe plus important que le pas "P" permettent ainsi d'obtenir des articulations 24, 26 plus robustes et/ou présentant une durée de vie supérieure à des paliers à roulement de dimension inférieure.

Les paliers 44A, 44B, 48A, 48B à roulement peuvent en outre être choisis parmi les paliers à roulement autolubrifiant et étanches évitant ainsi toute contamination des préformes 13 par du lubrifiant et permettant de diminuer les opérations de maintenance de la chaîne 20.

Selon une variante non représentée de l'invention qui est applicable à l'une quelconque des deux articulations paire ou impaire ou aux deux articulations paire et impaire simultanément, le goujon est remplacé par d'autres moyens d'attache tels que des tourillons formés venus de manière avec l'un des deux maillons.

Selon une variante non représentée de l'invention, les maillons pairs sont identiques aux maillons impairs, et la chaîne ne présente plus de plan de symétrie. Dans ce cas, les maillons pairs sont décalés verticalement par rapport aux maillons impairs de manière que les paliers à roulement pairs soient décalés verticalement par rapport aux paliers à roulement impairs.

Selon une autre variante non représentée de l'invention, chaque maillon impair est formé par un empilement vertical d'une plaque supérieure et d'une plaque inférieure dont chacune est respectivement identique à la plaque supérieure et à la plaque 66 inférieure de chaque maillon pair. Dans le cadre de cette variante, les plaques de chaque maillon pair ne sont pas réalisées venues de matière. Les potences des moyens de support sont alors rapportées et fixées sur chaque maillon. Cette variante permet de réaliser chaque maillon pair et impair avec un unique modèle de plaque.

Selon encore une variante non représentée de l'invention, les paliers à roulement sont remplacés par des paliers lisses qui comportent une bague externe dans laquelle une bague interne est montée rotative par glissement contre la bague externe.

Selon encore une autre variante non représentée de l'invention, les moyens de support des préformes sont portés par les goujons de chaque articulation. Ainsi chaque maillon porte un moyen de support des préformes par l'intermédiaire d'un goujon.

Selon encore une autre variante non représentée de l'invention, la tige verticale tournante des moyens de support est agencée coaxialement à l'intérieur des paliers à roulement. A cet effet, les goujons présentent par exemple une forme tubulaire, chaque goujon jouant alors le rôle de guidage en rotation de la tige tournante associée. Dans ce cas, les moyens de préhension des préformes ne sont pas déportés transversalement par rapport à la chaîne, comme c'est le cas dans le mode de réalisation précédemment décrit.

Bien entendu, l'invention n'est pas limitée au mode de réalisation représenté en exemple aux figures. Ainsi, l'invention porte de manière générale toute chaîne pour le transport de préformes dans laquelle chaque palier à roulement d'une articulation est décalé verticalement par rapport à chaque palier à roulement de l'articulation suivante.

## Revendications

1. Chaîne (20) sans fin pour le transport de préformes (13), notamment pour le transport de préformes (13) à travers un four (12) de conditionnement thermique des préformes (13), la chaîne (20) comportant une succession de maillons (22A, 22B) longitudinaux dont chacun est attaché de manière pivotante au suivant par une articulation (24, 26), chaîne (20) dans laquelle :
- chaque articulation (24, 26) comporte au moins un palier (44A, 44B, 48A, 48B) pour le montage pivotant de deux maillons (22A, 22B) successifs autour d'un axe (A3, A4) vertical d'articulation ;
- deux axes (A3, A4) d'articulation successifs sont espacés d'un pas (P) déterminé ;
- chaque maillon (22A, 22B) est apte à porter des moyens (50A, 50B) de support pour au moins une préforme (13) ;
**caractérisée en ce que** chaque palier (44A, 48A) d'une articulation (24) est décalé verticalement par rapport à chaque palier (44B, 48B) de l'articulation (26) suivante.

2. Chaîne (20) selon la revendication précédente, **caractérisée en ce que** le diamètre externe de chaque palier (44A, 44B, 48A, 48B) est supérieur ou égal au pas (P) déterminé.

3. Chaîne (20) selon l'une quelconque des revendications précédentes, **caractérisée en ce que** chaque articulation (24, 26) comporte deux paliers coaxiaux (44A, 44B, 48A, 48B).

4. Chaîne (20) selon la revendication précédente, **caractérisée en ce qu'**elle comporte un nombre pair de maillons (22A, 22B), et **en ce qu'**elle comporte des maillons (22A) impairs identiques entre eux et des maillons (22B) pairs identiques entre eux, chaque maillon (22A) impair étant montés en alternance avec un maillon (22B) pair le long de la chaîne (20).

5. Chaîne (20) selon la revendication précédente, **caractérisée en ce qu'**elle présente un plan de symétrie longitudinal orthogonal aux axes (A3, A4) verticaux d'articulation.

6. Chaîne (20) selon la revendication précédente, **caractérisée en ce que** chaque maillon (22B) pair comporte deux plaques (64, 66) longitudinales qui sont agencées verticalement de part et d'autre de chaque maillon (22A) impair suivant et précédent.

7. Chaîne (20) selon la revendication précédente, **caractérisée en ce que** les deux plaques (64, 66) d'un maillon (22B) pair sont liées rigidement entre elles.

8. Chaîne (20) selon la revendication précédente, **caractérisée en ce que** chaque maillon (22B) pair est réalisé venu de matière en un seul bloc.

9. Chaîne (20) selon l'une quelconque des revendications 6 à 8, **caractérisée en ce que** chaque articulation (24, 26) comporte au moins un galet (106) qui est destiné à être engrené sur une roue (18) dentée, chaque galet (106) étant interposé entre une plaque (64, 66) du maillon (22B) pair et le maillon (22A) impair.

10. Chaîne (20) selon l'une quelconque des revendications 4 à 9, **caractérisée en ce que** chaque maillon (22A) impair est réalisé venu de matière en un seul bloc.

11. Chaîne (20) selon l'une quelconque des revendications 5 à 9, **caractérisée en ce que** chaque maillon (22A) impair est formé par un empilement vertical d'une plaque supérieure et d'une plaque inférieure dont chacune est respectivement identique à la plaque supérieure et à la plaque inférieure de chaque maillon (22B) pair.

12. Chaîne (20) selon l'une quelconque des revendications précédentes, **caractérisée en ce que** les paliers (44A, 44B, 48A, 48B) sont formés par des paliers à roulements étanches autolubrifiants.

## Patentansprüche

1. Endloskette (20) für den Transport von Vorformen (13), insbesondere für den Transport von Vorformen (13) durch einen Ofen (12) zur thermischen Konditionierung der Vorformen (13) hindurch, wobei die Kette (20) eine Folge von Längsgliedern (22A, 22B) aufweist, von denen jedes durch ein Gelenk (24, 26) schwenkbar am folgenden befestigt ist, wobei in der Kette (20):
- jedes Gelenk (24, 26) wenigstens ein Lager (44A, 44B, 48A, 48B) für die schwenkbare Anbringung zweier aufeinander folgender Glieder (22A, 22B) um eine vertikale Gelenkachse (A3, A4) aufweist;
- zwei aufeinander folgende Gelenkachsen (A3, A4) mit einer bestimmten Teilung (P) beabstandet sind;
- jedes Glied (22A, 22B) geeignet ist, Mittel (50A, 50B) zur Abstützung für wenigstens eine Vorform (13) zu tragen;
**dadurch gekennzeichnet, dass** jedes Lager (44A, 48A) eines Gelenks (24) vertikal bezüglich jedes Lagers (44B, 48B) des folgenden Gelenks (26) versetzt ist.

2. Kette (20) nach dem vorhergehenden Anspruch, **dadurch gekennzeichnet, dass** der Außendurchmesser jedes Lagers (44A, 44B, 48A, 48B) größer als die oder gleich der bestimmten Teilung (P) ist.

3. Kette (20) nach einem der vorhergehenden Ansprüche, **dadurch gekennzeichnet, dass** jedes Gelenk (24, 26) zwei koaxiale Lager (44A, 44B, 48A, 48B) aufweist.

4. Kette (20) nach dem vorhergehenden Anspruch, **dadurch gekennzeichnet, dass** sie eine gerade Anzahl von Gliedern (22A, 22B) aufweist, und dadurch, dass sie ungeradzahlige Glieder (22A), die untereinander identisch sind, und geradzahlige Glieder (22B), die untereinander identisch sind, aufweist, wobei entlang der Kette (20) ungeradzahlige Glieder (22A) und geradzahlige Glieder (22B) abwechselnd angebracht sind.

5. Kette (20) nach dem vorhergehenden Anspruch, **dadurch gekennzeichnet, dass** sie eine Längssymmetrieebene aufweist, die zu den vertikalen Gelenkachsen (A3, A4) orthogonal ist.

6. Kette (20) nach dem vorhergehenden Anspruch, **dadurch gekennzeichnet, dass** jedes geradzahlige Glied (22B) zwei Längsplatten (64, 66) aufweist, welche vertikal beiderseits jedes nachfolgenden und vorangehenden ungeradzahligen Gliedes (22A) angeordnet sind.

7. Kette (20) nach dem vorhergehenden Anspruch, **dadurch gekennzeichnet, dass** die zwei Platten (64, 66) eines geradzahligen Gliedes (22B) starr miteinander verbunden sind.

8. Kette (20) nach dem vorhergehenden Anspruch, **dadurch gekennzeichnet, dass** jedes geradzahlige Glied (22B) einstückig in einem einzigen Block hergestellt ist.

9. Kette (20) nach einem der Ansprüche 6 bis 8, **dadurch gekennzeichnet, dass** jedes Gelenk (24, 26) wenigstens eine Rolle (106) aufweist, welche dazu bestimmt ist, mit einem Zahnrad (18) in Zahneingriff gebracht zu werden, wobei jede Rolle (106) zwischen einer Platte (64, 66) des geradzahligen Gliedes (22B) und dem ungeradzahligen Glied (22A) angeordnet ist.

10. Kette (20) nach einem der Ansprüche 4 bis 9, **dadurch gekennzeichnet, dass** jedes ungeradzahlige Glied (22A) einstückig in einem einzigen Block hergestellt ist.

11. Kette (20) nach einem der Ansprüche 5 bis 9, **dadurch gekennzeichnet, dass** jedes ungeradzahlige Glied (22A) von einem vertikalen Stapel aus einer oberen Platte und einer unteren Platte gebildet wird, die jeweils identisch mit der oberen Platte bzw. mit der unteren Platte jedes geradzahligen Gliedes (22B) sind.

12. Kette (20) nach einem der vorhergehenden Ansprüche, **dadurch gekennzeichnet, dass** die Lager (44A, 44B, 48A, 48B) von selbstschmierenden, dichten Wälzlagern gebildet werden.

## Claims

1. Endless chain (20) for transporting preforms (13), in particular for transporting preforms (13) through an oven (12) for heat-conditioning the preforms (13), the chain (20) comprising a succession of longitudinal links (22A, 22B), each of which is attached in a pivoting manner to the following one by an articulation (24, 26), in which chain (20):
- each articulation (24, 26) comprises at least one bearing (44A, 44B, 48A, 48B) for the pivotal mounting of two successive links (22A, 22B) about a vertical articulation axis (A3, A4);
- two successive articulation axes (A3, A4) are spaced apart by a defined spacing (P);
- each link (22A, 22B) is able to carry support means (50A, 50B) for at least one preform (13);
**characterized in that** each bearing (44A, 48A) of an articulation (24) is offset vertically with respect to each bearing (44B, 48B) of the following articulation (26).

2. Chain (20) according to the preceding claim, **characterized in that** the outside diameter of each bearing (44A, 44B, 48A, 48B) is greater than or equal to the defined spacing (P).

3. Chain (20) according to either one of the preceding claims, **characterized in that** each articulation (24, 26) comprises two coaxial bearings (44A, 44B, 48A, 48B).

4. Chain (20) according to the preceding claim, **characterized in that** it comprises an even number of links (22A, 22B), and **in that** it comprises odd links (22A) identical to one another and even links (22B) identical to one another, each odd link (22A) being mounted in alternating fashion with an even link (22B) along the chain (20).

5. Chain (20) according to the preceding claim, **characterized in that** it has a longitudinal plane of symmetry orthogonal to the vertical articulation axes (A3, A4).

6. Chain (20) according to the preceding claim, **characterized in that** each even link (22B) comprises two longitudinal plates (64, 66) which are arranged vertically on either side of each following and preceding odd link (22A).

7. Chain (20) according to the preceding claim, **characterized in that** the two plates (64, 66) of an even link (22B) are connected rigidly to one another.

8. Chain (20) according to the preceding claim, **characterized in that** each even link (22B) is formed integrally in a single block.

9. Chain (20) according to any one of Claims 6 to 8, **characterized in that** each articulation (24, 26) comprises at least one roller (106) which is intended to be engaged on a toothed wheel (18), each roller (106) being interposed between a plate (64, 66) of the even link (22B) and the odd link (22A).

10. Chain (20) according to any one of Claims 4 to 9, **characterized in that** each odd link (22A) is formed integrally in a single block.

11. Chain (20) according to any one of Claims 5 to 9, **characterized in that** each odd link (22A) is formed by a vertical stack of an upper plate and of a lower plate, each of which is respectively identical to the upper plate and to the lower plate of each even link (22B).

12. Chain (20) according to any one of the preceding claims, **characterized in that** the bearings (44A, 44B, 48A, 48B) are formed by self-lubricating sealed rolling bearings.
